# EUROPEAN PATENT SPECIFICATION

(11) **EP 0 788 868 B1**
(45) Date of publication and mention of the grant of the patent: **21.03.2001**
(21) Application number: 97200234.9
(22) Date of filing: 29.01.1997
(51) Int. Cl.: B29C 47/40, B29C 47/62

(54) **Process and machine for the mixing with continuous rolling of thermoplastic material**
Verfahren und Vorrichtung zum Mischen mit kontinuierlichen Walzen von thermoplastischem Material
Procédé et dispositif pour mélanger avec laminage en continu de matière thermoplastique

(30) Priority: 07.02.1996 IT MI960219
(43) Date of publication of application: 13.08.1997
(73) Proprietor: TECHINT COMPAGNIA TECNICA INTERNAZIONALE S.p.A., 20149 Milano (IT)
(72) Inventor: Rampazzo, Vittorino, Dairago (Milano) (IT)
(74) Representative: Raimondi, Alfredo, Dott. Ing. Prof.

(56) References cited:
- US-A- 4 131 371
- US-A- 4 300 839
- US-A- 4 352 568
- DATABASE WPI Section Ch, Week 9207 Derwent Publications Ltd., London, GB; Class A31, AN 92-054996 XP002031289 & SU 1 634 511 A (TAMBOVSK POLIMERMAS) , 15 March 1991
- PATENT ABSTRACTS OF JAPAN vol. 004, no. 094 (M-019), 8 July 1980 & JP 55 051543 A (TOSHIBA MACH CO LTD), 15 April 1980,

## Description

The present invention relates to a process for the mixing and continuous extrusion of thermoplastic materials in twin-screw continuous extruders, which comprises at least one stage involving rolling of the mixture during feeding of the latter towards the extrusion head and a continuous extrusion machine for implementing said process comprising a pair of threaded shafts with a correlated profile, each of which has peak sections of the threading and core sections thereof which are sunken asymmetrically with respect to its longitudinal axis.

It is known how the processing of thermoplastic polymers involves a first stage of preparation of the final composition desired, performed by mixing a basic polymer to which various fillers are added in order to enhance certain characteristics as opposed to others, thus giving rise to various types of compound suitable for different uses.

During a second stage the compound is extruded in the formats desired for the different needs.

These mixing and extrusion stages are performed by means of single and separate machines, known as mixers and extruders respectively, which have particular technical features specifically intended for the type of operation to be performed; more particularly, it is required that the mixers should be versatile and easily adaptable for mixing different types of compounds, that they should enable precise control with adjustment of the different processing parameters and specifically the mixing temperature and that, moreover, they should have a high production output.

It is also known of the double operation of mixing and extrusion carried out inside extruders of the type provided with two threaded shafts arranged, parallel or inclined with respect to one another, inside a mixing chamber of predetermined length and cross-section and co-operating together so as to perform both mixing of the product and feeding thereof for the purposes of extrusion. The prior art is disclosed into US 4,300,839.

These types of machines, however, have numerous drawbacks including the poor mixing capacity, in particular for certain types of compounds concentrated with colours and/or to which carbonates or talcs have been added in order to improve the mechanical characteristics of the final compound, lack of fle xibility on varying of the compound, the poor productivity and the difficulty in controlling the temperature.

The technical problem which is posed therefore is that of providing a machine of the type with two threaded shafts for the extrusion of thermoplastic materials, which combines the characteristics of productivity associated with extruders of the known type with a high capacity for mixing and homogenization of the material to be extruded.

Within the scope of this technical problem a further requirement is that of obtaining an improved degree of homogenization of the material for the same dimensions of the machine so as to have the possibility of reducing the overall dimensions of the machine itself with particular reference to the length (L) in relation to the diameter (D) of the mixing shaft for the same speed of feeding, and hence extrusion, of the material.

The above mentioned problem is solved by the machine according to claim 1.

Further details may be obtained from the following description of a non-limiting example of embodiment of the extrusion machine according to the invention, with reference to the accompanying drawings, in which:
Figure 1 shows a cross-sectional view along a longitudinal vertical plane of a machine according to the prior art;
Figure 2 shows a perspective view of an example of embodiment of a pair of threaded shafts according to the prior art;
Figure 3 shows a cross-section along the plane indicated by III-III in Fig. 1;
Figures 4a to 4d show cross-sections illustrating the sequence of mixing with rolling of the material during feeding thereof according to the prior art; and
Figure 5 shows an embodiment of the shaft according to the invention.

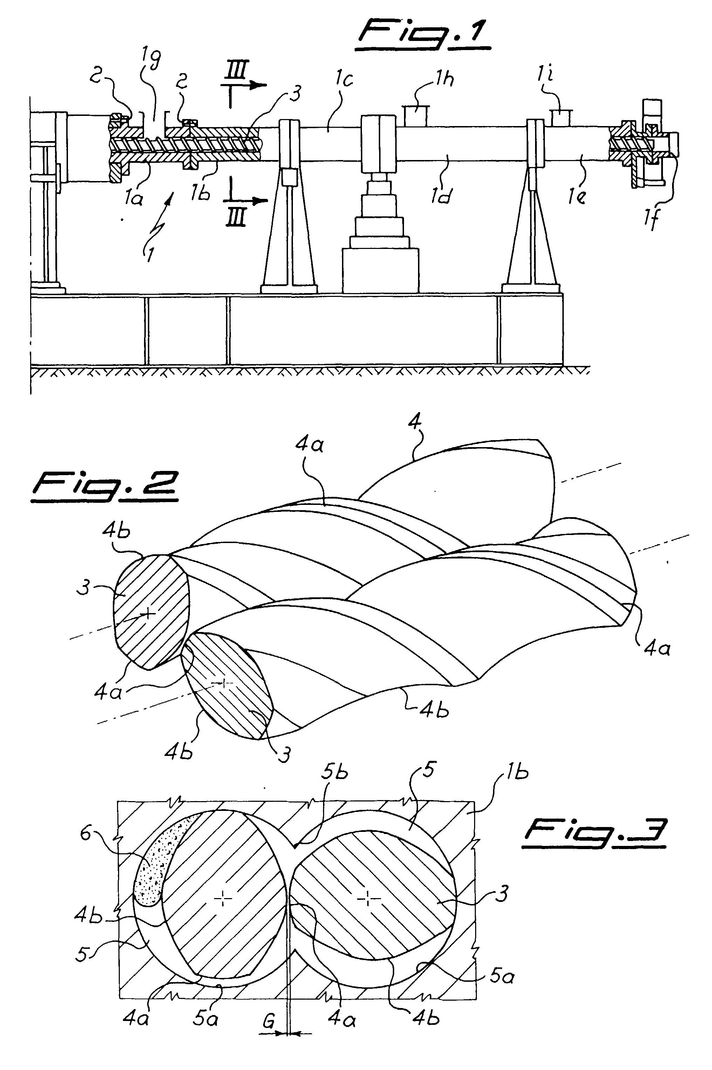

As shown in Figure 1, the machine 1 according to the prior art, commonly referred to as a twin-screw continuous extruder, consists of a series of components la, 1b, lc, ld, le, known per se and therefore not described in detail, which are connected together lengthwise by means of screws 2 or the like so as to form a single chamber 5 of the desired length.

Said components have a different external form depending on the position occupied in the successive arrangement, a form which also determines the different use of each section; Figure 1 shows for example the inlets lg, lh used, respectively, for supplying the material and for introducing filler additives for the material itself, as well as an inlet for degassification of the compound.

Said chamber has housed inside it two threaded shafts 3 arranged parallel with one another and extending over the entire length of the machine; in the example shown in the Figure, said shafts have double threads and are of the so-called interpenetrating type, i.e. with the profile of the peak of each one overlapping, during rotation, the trajectory followed by the profile of the peak of the other one; in order to avoid contact between the thread elements of the two shafts 3 during rotation, the shafts themselves are installed with a suitable angular phase-difference.

Said shafts may thus be operated with the same direction of rotation (co-rotating) or with a different direction of rotation (counter-rotating) if constructed with a suitable geometrical shape.

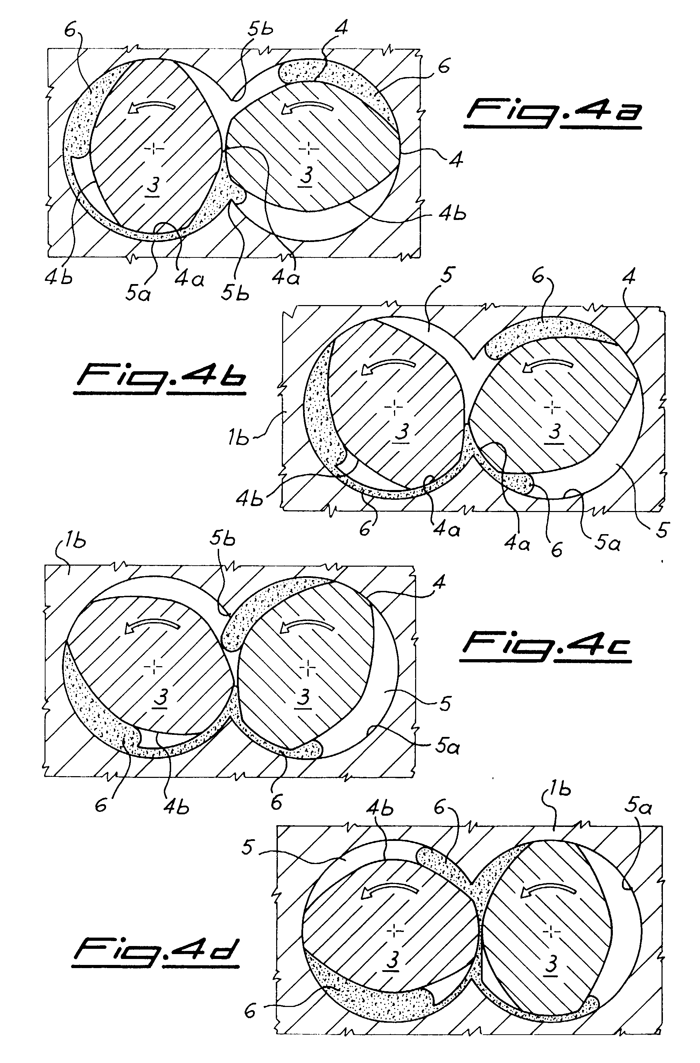

According to the prior art and as shown in Figures 2 and 3, each shaft 3 has a double threading 4, which is asymmetrical with respect to the longitudinal axis of the shaft itself, i.e. with respect to the direction of feeding of the material 6 towards the extrusion head 1f.

More particularly, said asymmetry is determined by a peak section 4a of the threading 4 of each shaft 3 which is sunken by a suitable amount with respect to the nominal diameter of the threading, so as to produce an asymmetry of the threading itself with respect to the longitudinal axis of the shaft 3 for each cross-sectional plane of the shaft itself.

Similarly, each shaft 3 has a core section 4b of the threading, adjacent to the said sunken peak section4a,4a, which in turn is sunken with respect to the nominal diameter of the core itself.

Thus each shaft 3 has, along its axial extension, peak zones 4a and core zones 4b which are sunken asymmetrically with respect to the longitudinal axis itself, thus giving rise to profiles of the two shafts 3 which are correlated, i.e. allowing two parallel shafts to be combined in an interpenetrating manner without there being interference between the respective asymmetrical threads during rotation, it being sufficient, during assembly, to arrange the shafts themselves with the correct relative phase-difference inside the extrusion chamber 5.

The configuration of the shafts thus realized gives rise, at least for a certain angle of rotation of the shaft 3, to a larger empty interstice between the sunken peak section 4a of the threading 4 of each shaft 3 and the internal surface 5a of the mixing chamber 5; the material 6 (in the region of these sections 5a of the chamber 5) correspondingly undergoes rolling on the surface of the chamber itself by the sunken peak section 4a of the threading for each rotation of the shaft 3 (i.e. each passing movement of said sunken section).

As illustrated in Fig. 3, the asymmetry of the threading of the correlated shafts 3 is such that, during rotation of the shafts, which are co-rotating in the example, the phase-difference of the same allows the gap G existing between the two shafts in the central narrow part 5b of the chamber 5 to be kept as small as possible, thus substantially preventing the material from passing between the shafts themselves.

The material is thus forced to follow the entire "figure-of-eight" path during feeding, a path which, being the longest one possible, allows one to obtain improved homogenization of the product to be fed to the extrusion head 1f.

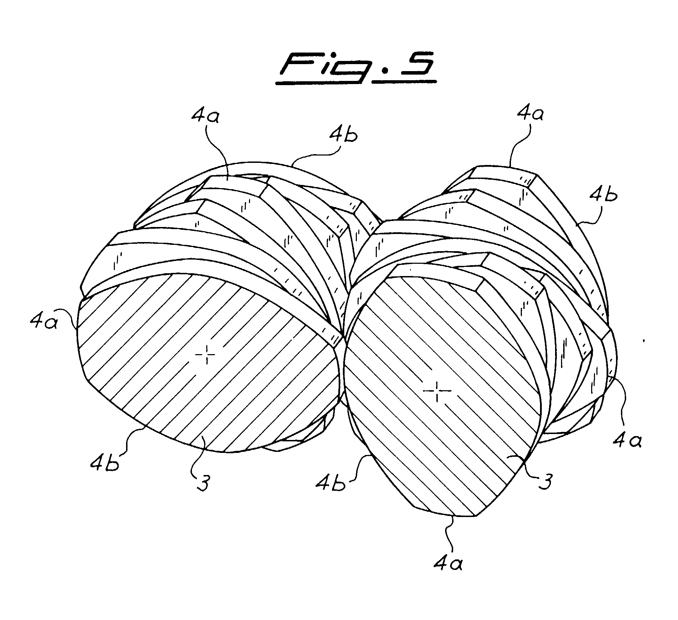

With reference to Figures 4a to 4d it can be seen, in fact, how the material 6 is rolled against the surface sections 5a of the chamber 5 by the action of the sunken peak 4a of each shaft 3 (Fig. 4a), while the peak part 4 of nominal height moves forward the product 6 itself, merely mixing it by means of reaction against the corresponding surface section 5a of the chamber 5.

Continuing with the rotation of the shafts (30° - Fig. 4b), the material, which finds the intermediate passage G obstructed by the proximity of the peaks of the threading of each shaft to the correlated cavities of the other shaft, is pushed such that it continues its path along the section of the chamber 5 located underneath the second shaft 3; in this section the material is further rolled on the corresponding surface of the chamber by the sunken peak 4a of the other shaft.

Correspondingly, the other peak section 4, which is of nominal height, causes further feeding of the material itself which, passing through the upper central zone of the chamber 5, completes the "figure-of-eight" path mentioned, continuing feeding for further mixing as far as the extrusion head 1f.

It can be understood, therefore, how the process for rolling the material inside the mixing chamber 5 of a twin-screw extruder 1 enables the degree of homogenization of the material 6 to be increased considerably during the conventional feeding movement along a "figure-of-eight" path, this increase in homogenization being able to be transformed substantially into a considerable reduction in the overall length L of the machine which, in a smaller length, achieves the same degree of homogenization obtained by machines of the known type of much greater length.

The machine described is therefore suitable for implementing a process for the processing of thermoplastic materials and the like which are to be continuously extruded, said process comprising at least one stage involving rolling of the material itself during its feeding movement inside the mixing chamber from the supply inlet to the extrusion head.

Expressed in the current terminology of the sector, it may be said that the same degree of homogenization of the material is obtained with a much smaller L/D ratio (L = shaft length; D = screw diameter) than the corresponding ratio of machines of the known type.

Many variants may be introduced as regards the realization of the parts which make up the invention, without thereby departing from the protective scope of the present patent as defined by the claims which follow.

According to the invention, the sunken peak section is discontinuous in sections both along sectional planes perpendicular to the axis of rotation (Fig. 5) and along the peak of the thread which has sections of variable height,
with a corresponding variation also in the respective correlated cores.

Finally the threaded shafts could also be counter-rotating instead of co-rotating.

## Claims

1. Machine for the continuous extrusion of thermoplasic material and the like, comprising at least one mixing chamber (5) and at least one pair of threaded shafts (3) of the mutually interpenetrating type, each provided with at least two threads arranged inside said mixing chamber (5), said threaded shafts (3) have at least one peak section (4a) of the threading which is sunken asymmetrically with respect to the nominal diameter of the threading and said threaded shafts (3) have at least one core section (4b) of the threading which is sunken asymmetrically with respect to the nominal diameter of the core itself so as to produce surfaces of said shafts which are correlated and an empty interstice between the sunken threading section (4a) and the internal surface of the chamber (5) so as to perform rolling of the material on at least a section of the surface (5a) of the chamber (5) itself during feeding of the material (6) towards the mixing chamber outlet, characterized in that said sunken peak section is discontinuous along the extension of the threading.

2. Machine according to Claim 1, characterized in that an extrusion head (1f) is arranged at the end of the mixing chamber (5).

3. Machine according to Claim 1, characterized in that said threaded shafts (3) are arranged parallel to one another.

4. Machine according to Claim 1, characterized in that said threaded shafts (3) are co-rotating.

5. Machine according to Claim 1, characterized in that said threaded shafts are counter-rotating.

6. Machine according to Claim 1, characterized in that said sunken peak section is discontinuous along planes perpendicular with respect to the axis of rotation.

## Patentansprüche

1. Maschine zum kontinuierlichen Extrudieren von thermoplastischem Material und dergleichen, umfassend mindestens eine Mischkammer (5) und mindestens ein Paar Schneckenwellen (3) der Bauart mit gegenseitig ineinander eindringenden Schneckengewinden, welche innerhalb der Mischkammer (5) angeordnet sind, wobei die Schneckenwellen (3) mindestens einen Gewindekopfabschnitt (4a) des Gewindes aufweisen, der bezüglich des nominellen Gewindedurchmessers asymmetrisch zurückgenommen ist, und die Schnekkenwellen (3) mindestens einen Gewindekernabschnitt (4b) aufweisen, der bezüglich des nominellen Kerndurchmessers des Gewindes asymmetrisch zurückgenommen ist, um Oberflächen an den Schneckenwellen zu erzeugen, die miteinander korrelieren, sowie einen Leerraum zwischen dem zurückgenommenen Gewindeabschnitt (4a) und der Innenfläche der Mischkammer (5) zu schaffen, um ein Abwälzen des Materials auf mindestens einem Oberflächenabschnitt (5a) der Mischkammer (5) während des Förderns des Materials (6) zum Mischkammerauslaß zu bewirken, dadurch **gekennzeichnet**, daß der zurückgenommene Kopfabschnitt längs der Längserstreckung des Schneckengewindes diskontinuierlich ist.

2. Maschine nach Anspruch 1, dadurch **gekennzeichnet**, daß ein Extrudierkopf(1f) am Ende der Mischkammer (5) vorgesehen ist.

3. Maschine nach Anspruch 1, dadurch **gekennzeichnet**, daß die Schneckenwellen (3) parallel zueinander angeordnet sind.

4. Maschine nach Anspruch 1, dadurch **gekennzeichnet**, daß die Schneckenwellen (3) gleichsinnig rotierend sind.

5. Maschine nach Anspruch 1, dadurch **gekennzeichnet**, daß die Schneckenwellen gegensinnig rotierend sind.

6. Maschine nach Anspruch 1, dadurch **gekennzeichnet**, daß der zurückgenommene Kopfabschnitt längs Ebenen diskontinuierlich ist, die senkrecht zur Drehachse stehen.

## Revendications

1. Machine pour l'extrusion continue de matière thermoplastique et analogue, comprenant au moins une chambre de mélange (5) et au moins une paire d'arbres filetés (3) du type à interpénétration mutuelle, chacun présentant au moins deux filets disposés à l'intérieur de la chambre de mélange (5), lesdits arbres filetés (3) présentent au moins une section de dimension transversale maximum (4a) du filetage qui est décalée de manière asymétrique par rapport au diamètre nominal du filetage et lesdits arbres filetés (3) présentent au moins une section de dimension transversale minimum (4b) du filetage qui est décalé de manière asymétrique par rapport au diamètre nominal de l'arbre lui-même de manière à produire des surfaces desdits arbres qui sont en corrélation ainsi qu'un interstice vide entre la section de filetage décalée (4a) et la surface interne de la chambre (5) de manière à effectuer un laminage de la matière sur au moins une section de la surface (Sa) de la chambre (5) elle-même pendant l'alimentation de la matière (6) vers la sortie de la chambre de mélange, caractérisée en ce que ladite section de dimension transversale maximum est discontinue le long de l'extension du filetage.

2. Machine selon la revendication 1, caractérisée en ce qu'une tête d'extrusion (1f) est disposée à l'extrémité de la chambre de mélange (5).

3. Machine selon la revendication 1, caractérisée en ce que lesdits arbres filetés (3) sont disposés parallèlement l'un à l'autre.

4. Machine selon la revendication 1, caractérisée en ce que lesdits arbres filetés tournent ensemble.

5. Machine selon la revendication 1, caractérisée en ce que lesdits arbres filetés tournent en sens contraire.

6. Machine selon la revendication 1, caractérisée en ce que la section de dimension transversale maximum décalée est discontinue le long de plans perpendiculaires par rapport à l'axe de rotation
